## Europäisches Patentamt
## European Patent Office
## Office européen des brevets

(19)

(11) Publication number: **0 044 858**
**B1**

(12) # EUROPEAN PATENT SPECIFICATION

(45) Date of publication of the patent specification:
18.04.84

(51) Int. Cl.³: **B 21 C 37/29,** B 21 D 39/04 //
B23B47/18

(21) Application number: 81900458.1

(22) Date of filing: 29.01.81

(86) International application number:
PCT/FI 81/00006

(87) International publication number:
**WO 81/02118 (06.08.81** Gazette 81/19)

(54) A FLANGE FORMING DRILL MEANS.

(30) Priority: **30.01.80 FI 800280**

(43) Date of publication of application:
**03.02.82 Bulletin 82/5**

(45) Publication of the grant of the patent:
18.04.84 Bulletin 84/16

(84) Designated Contracting States:
**AT CH DE FR GB LI NL SE**

(56) References cited:
**DE - A - 2 434 498**
**US - A - 3 592 038**
**US - A - 3 714 808**
**US - A - 3 844 149**

(73) Proprietor: **G.A. SERLACHIUS OY, F-35800 Mänttä (FI)**

(72) Inventor: **LARIKKA, Leo, Palosaarentie 13-17 A 7,**
**SF-65200 Vaasa 20 (FI)**

(74) Representative: **Lorenz, Eduard, Rechtsanwälte Eduard**
**Lorenz - Bernhard Seidler Margrit Seidler - Dipl.-Ing.**
**Hans-K. Gossel Dr. Ina Philipps - Dipl.-Chem. Rainer**
**Wulf Widenmayerstrasse 23, D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# A Flange-Forming Drill Means

The present invention relates to a flange-forming drill means for drilling a hole through the side of a pipe or the like and for forming a hole-encircling flange, said means comprising: a body, a drive shaft rotatably journalled to the body, a drill rod with its drill bit mounted on the end of the drive shaft, forming members partly fitted within the drill rod, an adjustment member, by turning of which around the drill rod the forming members can be made to project beyond the jacket surface of the drill rod, supporting legs by which the drill means can be supported against a work piece and which are fitted on the body on either side of the drive shaft in parallel relationship therewith, a feeding nut mounted on the supporting legs and which can be opened and closed for removal from and engagement with a feeding screw formed on the drive shaft, whereby in the closed position of the feeding nut, with the drive shaft rotating, the supporting legs project outwards from the body resulting in rising of the projecting forming members, rotating along with the drill rod, from below the edges of the hole and thus forming of a flange.

Such a flange-forming drill means is disclosed in US-A Nos. 3592038 and 3714808. That device has proven very useful when it is necessary to form a flanged hole through the side of a pipe, e.g. for connection of a branch.

DE-A 1 No. 2434498 shows manual or semiautomatic-operable flange-forming drill means with a rotatable tubular sleeve having a drill bit and flange-forming members at one end and an adjustment member at the other end, whereby there is within the sleeve an axially movable spindle, which can be moved by the adjustment member in order to extend the flange-forming members. By semiautomatic operation there are no means for supporting the drill means in respect of the work piece such as a pipe (the supporting means can be used only for manual operation). The operator must detect the moment, when the hole has been drilled, whereafter he must effect by manual control the operation of the adjustment member.

The object of this invention is to further develop the said device, so that after the drilling operation shifts, without interruption in the operation, automatically to the flange-forming step.

This object is achieved with the above-mentioned type of device in such a manner that the feeding nut is arranged to close automatically by means of a link mechanism when the supporting legs have moved a certain distance into the body, and that to the supporting legs are secured brake bits at such a level that they respond to the adjustment member when the supporting legs have moved said certain distance into the body, said brake bits turning the adjustment member relative to the drill rod and effect the extension of the forming members substantially simultaneously with the closure of the feeding nut. Thus, an essential feature in the invention is the utilization of the movement of the supporting legs for automatic closing of the feeding nut.

The arrangement ensures that the forming members will be automatically extended from the drill rod, after the hole has been drilled, simultaneously with the closure of the feeding nut.

In the following specification the invention is illustrated in more detail with reference made to the accompanying drawings, in which

Fig. 1 shows an embodiment of the invention in side view and partially sectioned in a position where the hole drilling is finished and where the automatics according to the invention are ready to work,

Fig. 2 shows a device of Fig. 1 in a condition in which the automatics have worked after the drill means has been urged a small distance downwards from the position of Fig. 1,

Fig. 3 is a section taken along the line III-III in Fig. 1,

Fig. 4 is a section taken along the line IV-IV in Fig. 1, and

Fig. 5 is a section taken along the line V-V in Fig. 2.

The device comprises a body 1 to which is rotatably journalled a drive shaft 2 with a toothed gear 3 in its upper end rotated by means of a drive motor, not shown. To the lower end of the drive shaft 2 is connected a head portion 4 of the drill means, comprising a drill rod 5 with its drill bit, through the drill rod crosswise extending forming pins 6 as well as an externally smooth protective shield 7 enclosing an adjustment cone which can be turned around the drill rod thus extending the pins 6 so as to project from the drill rod or to be retracted into the drill rod, as described in more detail in the parallel European Patent Application EP No. 81900459.9 published under No. 0044336. The shield 7 is in working contact with the adjustment cone therein, so that the forming pins 6 can be retracted and extended by turning the shield 7 with respect to the drill rod 5. Turning of the protective cone 7 is possible after lifting said protective cone 7 slightly upwards in axial direction.

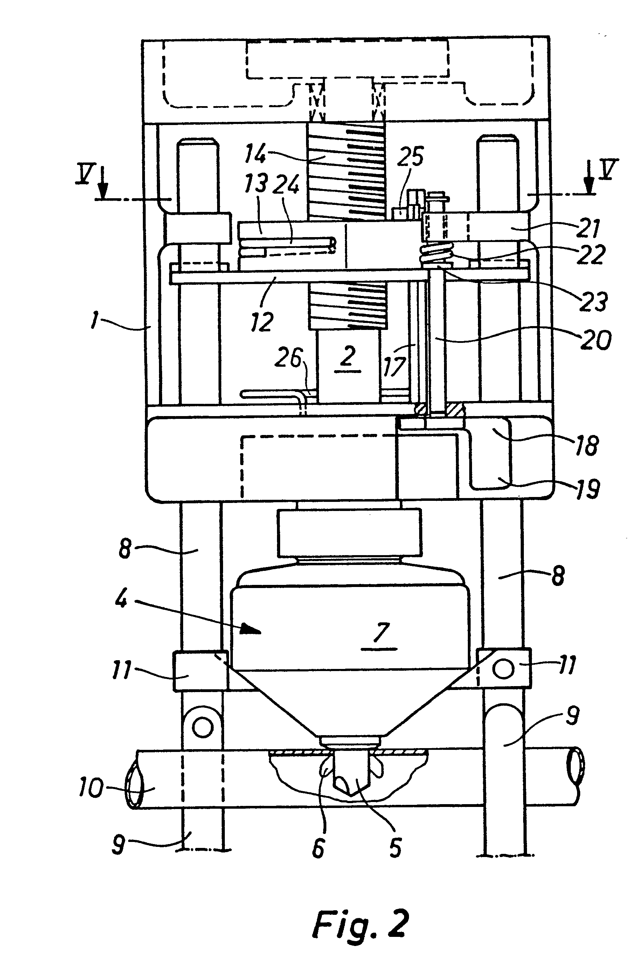

To the body 1 on either side of the shaft 2 there are slidably journalled supporting legs 8 whose hook-shaped ends 9 can be brought to engage the piece 10 to be worked for supporting the drill means with respect to said piece to be worked on. Supporting legs 8 are fitted with brake bits 11 which, after the hole has been drilled through the piece 10 to be worked on, lean against the conical lower face of the protective shield 7. With continued downwards pressing of the drill means, the brake bits 11 lift the shield 7 in axial direction upwards and thus, by the action of the friction, upon rotation of the device, between the brake bits 11 and shield 7, the protective shield 7 together with associated adjustment cone turns with respect to the drill rod 5 and effects the projection of the forming pins 6 from the rod 5, as depicted in Fig. 2.

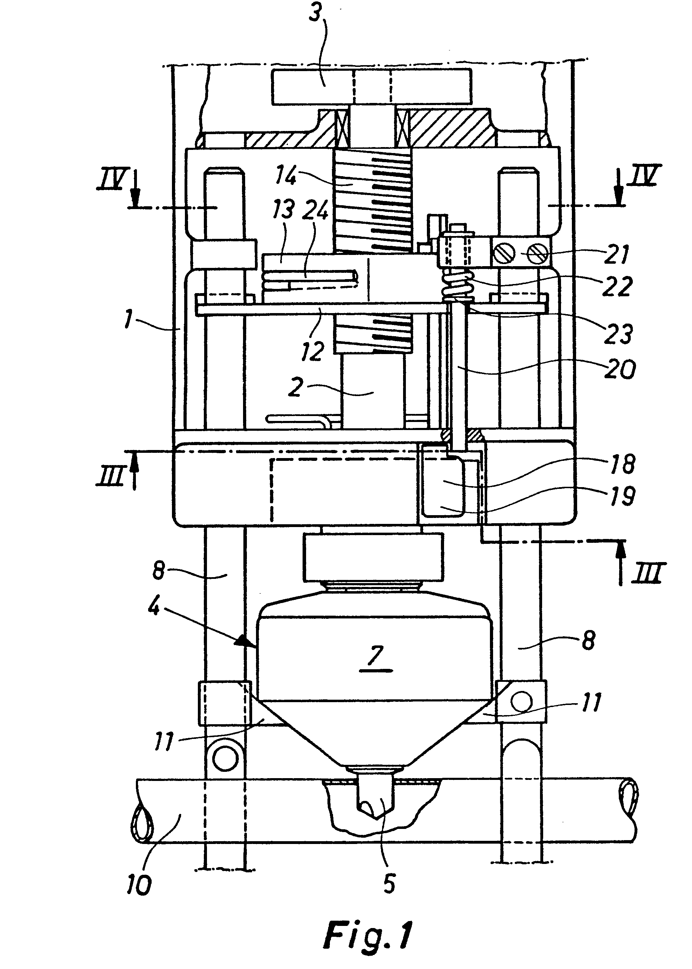

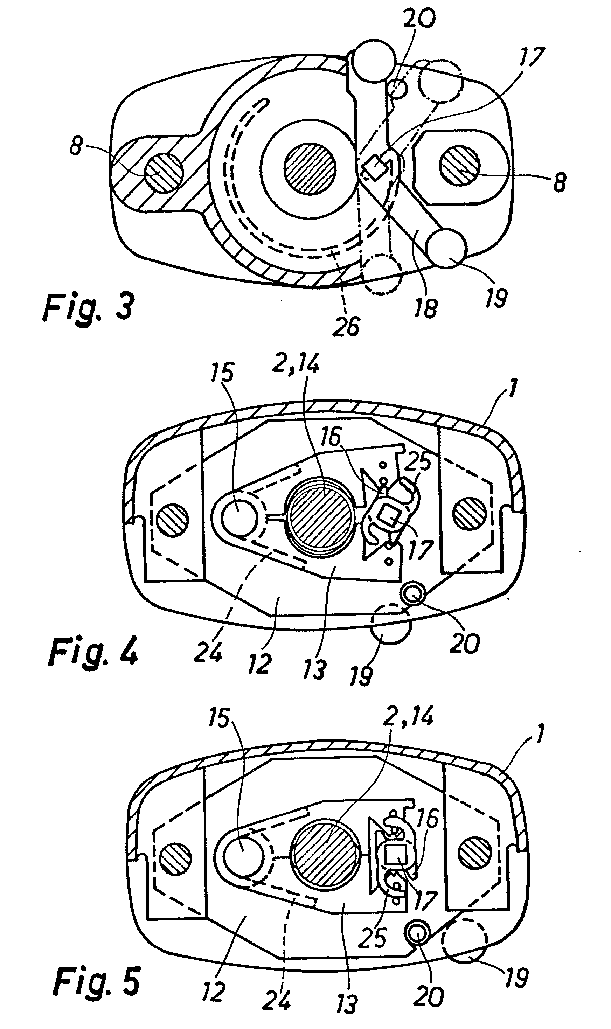

Upper ends of the supporting legs 8 are secured to each other by means of a plate 12 which carries the feeding nut 13 which, on the other hand, can be brought into contact with a feeding screw 14 provided on the shaft 2. Nut 13 consists of two halves turning around an axis 15 and a spring 24 urges the halves of nut 13 towards a closed position, i.e. into engagement with the screw 14. The ends of the nut 13 halves, disposed opposite to each other relative to the axis 15, are designed as counter members for a cam portion 16, which in the first position depicted in Fig. 4 retains the halves of nut 13 open or disengaged from the screw 14 and in the second position shown in Fig. 5 allows the spring 24 to urge the halves of nut 13 together and into engagement with the screw 14. A latch 25 connected with the cam portion 16 keeps the nut closed and a spring 26 connected with an arm 17 urges the cam portion16 towards said second position (Fig. 5) for forced closure of the nut 13. By means of the arm 17 the cam portion 16 is in working engagement with a pivotable lever 18 whose ends are designed as gripping means 19 by which the lever 18 is manually pivotable to the first position (Fig. 4), in which the cam portion 16 opens the feeding nut 13. The cooperative counter faces of the cam portion 16 and feeding nut 13 are so designed that under the combined effect of spring 24 and spring 26 the cam portion 16 and lever 18 tend to turn in forced manner into their second position in which the nut 13 is allowed to close and the latch means 25 keeps it that way. For retaining the cam portion 16 and lever 18 in their first position (Fig. 4) there is fitted a retainer pin 20 which is longitudinally slideable in a guide means 21 connected with the body 1 and urged downwards by means of a spring 22 in such a manner that the limiting flange 23 responds to the top surface of the plate 12. With the supporting legs 8 in the Fig. 1 position, the retainer pin 20 keeps, by means of lever 18 and cam portion 16, the feeding nut in the position depicted in Fig. 4. When the drill means is urged still further down from the position of Fig. 1, the plate 12 associated with the supporting legs 8 lifts the pin 20 upwards with respect to the body 1, whereby the lever 18 is released and the feeding nut 13 closed into the position of Fig. 5. Thus, the rotating feeding screw 14 and feeding nut 13 begin to push the supporting legs 8 out of the body 1. The body 1 pulls therealong the rotating drill bit with projecting forming means 6 upwards from the work piece 10, the edges of the hole bending upwards and forming a collar flange.

It is important to appreciate that in the device according to the invention the movement of the supporting legs 8 is used for automation of two different functional steps. First of all, with the shield 7 responding to the brake bits 11, the forming pins 6 project from the drill rod and, secondly, almost simultaneously thereafter the pin 20 loosens itself from the lever 18 and the feeding nut 13 closes. Both actions occur substantially simultaneously after drilling of the hole, when the drill means is pressed still a slight distance downwards with respect to the supporting legs 8.

## Claims

1. A flange-forming drill means for drilling a hole through the side of a pipe (10) or the like and for forming a hole-encircling flange, said means comprising: a body (1), a drive shaft (2) rotatably journalled to the body (1), a drill rod (5) with its drill bit mounted on the end of the drive shaft (2), forming members (6) partly fitted within the drill rod (5), an adjustment member (7), by turning of which around the drill rod the forming members (6) can be made to project beyond the jacket surface of the drill rod (5), supporting legs (8) by which the drill means can be supported against a work piece (10) and which are fitted on the body (1) on either side of the drive shaft (2) in parallel relationship therewith, a feeding nut (13) mounted on the supporting legs (8) and which can be opened and closed for removal from and engagement with a feeding screw (14) formed on the drive shaft (2), whereby in the closed position of the feeding nut (13), with the drive shaft (2) rotating, the supporting legs (8) project outwards from the body (1) resulting in rising of the projecting forming members (6), rotating along with the drill rod (5), from below the edges of the hole and thus forming of a flange, characterized in that the feeding nut (13) is arranged to close automatically by means of a link mechanism (16 to 20) when the supporting legs (8) have moved a certain distance into the body (1), and that to the supporting legs (8) are secured brake bits (11) at such a level that they respond to the adjustment member (7) when the supporting legs (8) have moved said certain distance into the body (1), said brake bits (11) turning the adjustment member (7) relative to the drill rod (5) and effect the extension of the forming members (6) substantially simultaneously with the closure of the feeding nut (13).

2. A flange-forming drill means according to Claim 1, characterized in that the link mechanism comprises a lever (18) pivotably journalled to the body and associated with a cam portion (16) disposed between the halves of the feeding nut (13) and which, in the first position of lever (18), opens the feeding nut (13) and, in the second position, closes the feeding nut, and in that the lever (18) is retained in its first position by means of a retainer means (20) on which the movement of the supporting legs (8) relative to the body (1) is arranged to act in such a manner that, with the supporting legs moved over a certain distance into the body, the retainer means (20) releases the lever (18) and the cam portion (16) from the first position (Fig. 4) to the other position (Fig. 5).

3. A flange-forming drill means according to Claim 2, characterized in that a spring (24) urges the halves of the feeding nut (13) towards the closed position, and that another spring (26) tends in forced manner to turn the cam portion (16) from the first position to the second.

4. A flange-forming drill means according to Claim 3, characterized in that the counter faces of the cam portion (16) and feeding nut (13) are so designed that also the closing spring (24) of the feeding nut (13) tends to urge the cam portion (16) from the first position to the second.

5. A flange-forming drill means according to Claim 2, characterized in that the ends of the lever (18) are designed as gripping means (19), by which the lever (18) can be manually turned from the second position to the first.

6. A flange-forming drill means according to Claim 2, characterized in that the cam portion (16) is provided with a latch (25) which in the second position of the cam portion grips in a shape-lock manner the halves of the feeding nut (13) and keeps the feeding nut (13) closed.

7. A flange-forming drill means according to Claim 3, characterized in that the lever (18) is connected to the cam portion (16) by means of an arm (17) which is engaged by said second spring (26).

8. A flange-forming drill means according to Claim 2, characterized in that the retainer means comprises a spring-loaded, axially directed pin (20) which the axial movement of the supporting legs (8) relative to the body (1) shifts in axial direction against the force of the spring (22), and in that the free end of the pin (20) is in cooperation with the lever (18).

## Patentansprüche

1. Flanschbildende Bohrvorrichtung zum Bohren eines Lochs durch die Wand eines Rohrs (10) oder dergleichen und zum Herstellen eines das Loch umgebenden Flanschs, mit einem Hauptteil (1), einer in dem Hauptteil (1) drehbar gelagerten Antriebswelle (2), einer am Ende der Antriebswelle (2) angebrachten Bohrstange (5) mit Bohrschneide, teilweise in der Bohrstange (5) angeordneten Umformorganen (6), einem Einstellorgan (7), das beim Drehen um die Bohrstange die Umformorgane (6) aus der Mantelfläche der Bohrstange (5) heraustreten lässt, Stützbeinen (8), die gegen ein Werkstück (10) abgestützt werden können und die an jeweils einer Seite der Antriebswelle (2) parallel zu dieser an dem Hauptteil (1) befestigt sind, einer Vorschubmutter (13), die an den Stützbeinen (8) angebracht ist und die geöffnet und geschlossen werden kann, um sie von einer auf der Antriebswelle (2) ausgebildeten Vorschubspindel (14) abheben und auf diese aufsetzen zu können, wodurch bei in Schliessstellung befindlicher Vorschubmutter (13) und umlaufender Antriebswelle (2) die Stützbeine (8) sich aus dem Hauptteil (1) nach aussen vorschieben, was dazu führt, dass die mit der Bohrstange (5) umlaufenden vorstehenden Umformorgane (6) von ihrer Lage unterhalb der Ränder des Lochs ansteigen und einen Flansch entstehen lassen, dadurch gekennzeichnet, dass die Vorschubmutter (13) so eingerichtet ist, dass sie sich automatisch mit Hilfe eines verbindenden Getriebes (16 bis 20) schliesst, wenn die Stützbeine (8) sich ein bestimmtes Stück weit in den Hauptteil (1) hinein bewegt haben, dass an den Stützbeinen (8) Bremsbacken (11) in einer solchen Höhe befestigt sind, dass sie auf das Einstellorgan (7) ansprechen, wenn die Stützbeine (8) sich um das erwähnte bestimmte Stück weit in den Hauptteil (1) hinein bewegt haben, und dass die Bremsbacken (11) das Einstellorgan (7) gegenüber der Bohrstange (5) verdrehen und das Heraustreten der Umformorgane (6) praktisch gleichzeitig mit dem Schliessen der Vorschubmutter (13) bewirken.

2. Flanschbildende Bohrvorrichtung nach Anspruch 1, dadurch gekennzeichnet, dass das verbindende Getriebe einen Hebel (18) aufweist, der schwenkbar an dem Hauptteil angebracht und einem Nockenteil (16) zugeordnet ist, das zwischen den Hälften der Vorschubmutter (13) angeordnet ist und das in der ersten Stellung des Hebels (18) die Vorschubmutter (13) öffnet und in der zweiten Stellung die Vorschubmutter schliesst, und dass der Hebel (18) in seiner ersten Stellung durch eine Halteeinrichtung (20) gehalten wird, auf die die Bewegung der Stützbeine (8) gegenüber dem Hauptteil (1) in der Weise einzuwirken vermag, dass, wenn die Stützbeine sich ein bestimmtes Stück weit in den Hauptteil hinein bewegt haben, die Halteeinrichtung (20) den Hebel (18) und das Nockenteil (16) aus der ersten Stellung (Fig. 4) in die zweite Stellung (Fig. 5) übergehen lässt.

3. Flanschbildende Bohrvorrichtung nach Anspruch 2, dadurch gekennzeichnet, dass eine Feder (24) die Hälften der Vorschubmutter (13) in die Schliessstellung zusammenführt, und dass eine weitere Feder (26) bestrebt ist, das Nockenteil (16) zwangsweise aus der ersten Stellung in die zweite zu drehen.

4. Flanschbildende Bohrvorrichtung nach Anspruch 3, dadurch gekennzeichnet, dass die zusammenwirkenden Flächen von Nockenteil (16) und Vorschubmutter (13) so ausgebildet sind, dass auch die Schliessfeder (24) für die Vorschubmutter (13) bestrebt ist, das Nockenteil (16) zwangsweise aus der ersten Stellung in die zweite zu führen.

5. Flanschbildende Bohrvorrichtung nach Anspruch 2, dadurch gekennzeichnet, dass die Enden des Hebels (18) zu einem Griffteil (19) geformt sind, durch das der Hebel (18) von Hand aus der zweiten Stellung in die erste geschwenkt werden kann.

6. Flanschbildende Bohrvorrichtung nach Anspruch 2, dadurch gekennzeichnet, dass das Nockenteil (16) mit einer Klinke (25) versehen ist, die in der zweiten Stellung des Nockenteils in formschlüssiger Weise die Hälften der Vorschubmutter (13) ergreift und die Vorschubmutter (13) in Schliessstellung hält.

7. Flanschbildende Bohrvorrichtung nach Anspruch 3, dadurch gekennzeichnet, dass der Hebel (18) mit dem Nockenteil (16) durch einen Arm (17) verbunden ist, der von der zweiten Feder (26) beaufschlagt wird.

8. Flanschbildende Bohrvorrichtung nach Anspruch 2, dadurch gekennzeichnet, dass die Halteeinrichtung einen federbeaufschlagten, axial ausgerichteten Stift (20) aufweist, der durch die Axialbewegung der Stützbeine (8) gegenüber dem Hauptteil (1) in axialer Richtung gegen die Kraft der Feder (22) verschoben wird, und dass das freie Ende des Stifts (20) mit dem Hebel (18) zusammenwirkt.

**Revendications**

1. Dispositif de perçage formant une flasque conçu pour percer un trou à travers la paroi d'un tuyau (10) ou d'un objet semblable et pour former une flasque entourant le trou, ledit dispositif comprenant un corps (1), un arbre moteur (2) logé dans le corps (1), une tige perceuse (5) ayant une tranche de perçage montée sur l'extrémité de l'arbre moteur (2), des éléments formants (6) partiellement disposés à l'intérieur de la tige perceuse (5), un élément d'ajustage qui permet, en tournant autour de la tige perceuse, de sortir les éléments formants (6) au-delà de la surface enveloppante de la tige perceuse (5), des jambes d'appui (8) par lesquelles le dispositif perceur peut s'appuyer contre une pièce à usiner (10) et qui sont fixées au corps (1) des deux côtés de l'arbre moteur (2) et, parallèlement à celui-ci, un écrou d'alimentation (13) monté sur les jambes d'appui (8) et qui peut être ouvert et fermé pour être dégagé d'une vis d'alimentation (14) ou engagé dans cette dernière qui est formée sur l'arbre moteur (2), mouvement d'ouverture et de fermeture par lequel l'écrou d'alimentation (13) dans sa position fermée, alors que l'arbre moteur (2) est en rotation, fait sortir les jambes d'appui (8) du corps (1) entraînant l'élévation des éléments formants en saillie (6) qui tournent le long de la tige perceuse (5) de la position en dessous des bords du trou et formant ainsi une flasque, caractérisé par le fait que l'écrou d'alimentation (13) est disposé de manière à fermer automatiquement moyennant un mécanisme de raccordement (16 à 20) lorsque les jambes d'appui (8) ont avancé à une certaine distance dans le corps (1) et que, sur les jambes d'appui (8), sont fixées des mâchoires de frein (11) à une hauteur telle qu'elles correspondent à l'élément d'ajustage (7) lorsque les jambes d'appui (8) ont avancé de ladite distance déterminée dans le corps (1), lesdites mâchoires de frein (11) tournant l'élément d'ajustage (7) par rapport à la tige perceuse (5) et effectuant l'extension des membres formants (6) pratiquement simultanément avec la clôture de l'écrou d'alimentation (13).

2. Dispositif perceur formant une flasque selon la revendication 1, caractérisé par le fait que le mécanisme de raccordement comprend un levier (18) logé de manière pivotante sur le corps et associé à la partie à cames (16) disposée entre les moitiés de l'écrou d'alimentation (13) et qui, dans la première position du levier (18), ouvre l'écrou d'alimentation (13) et, dans la seconde position, ferme l'écrou d'alimentation, et que le levier (18) est retenu dans la première position au moyen d'un dispositif de blocage (20) sur lequel le mouvement des jambes d'appui (8) par rapport au corps (1) est conçu de manière à agir en sorte que, les jambes d'appui s'étant déplacées d'une certaine distance dans le corps, le dispositif de blocage (20) libère le levier (18) et que la partie à cames (16) passe de la première position (fig. 4) à l'autre position (fig. 5).

3. Dispositif perceur formant une flasque selon la revendication 2, caractérisé par le fait qu'un ressort (24) pousse les moitiés de l'écrou d'alimentation (13) vers la position fermée et qu'un autre ressort (26) tend forcément à tourner la partie à cames (16) de la première position à la seconde.

4. Dispositif perceur formant une flasque selon la revendication 3, caractérisé par le fait que les faces en interaction de la partie à cames (16) et de l'écrou d'alimentation (13) sont conçues de manière que le ressort de fermeture (24) de l'écrou d'alimentation (13) a tendance à pousser la partie à cames (16) de la première position dans la seconde.

5. Dispositif perceur formant une flasque selon la revendication 2, caractérisé par le fait que les extrémités du levier (18) sont formées comme poignée (19) par laquelle le levier (18) peut être tourné à la main de la deuxième position dans la première.

6. Dispositif perceur formant une flasque selon la revendication 2, caractérisé par le fait que la partie à cames (16) est pourvue d'un loquet (25) qui, dans la seconde position de la partie à cames, s'emboîte dans les moitiés de l'écrou d'alimentation (13) et maintient l'écrou (13) en position fermée.

7. Dispositif perceur formant une flasque selon la revendication 3, caractérisé par le fait que le levier (18) est relié à la partie à cames (16) au moyen d'un bras (17) dans lequel s'engage ledit deuxième ressort (26).

8. Dispositif perceur formant une flasque selon la revendication 2, caractérisé par le fait que le dispositif de blocage comprend une pointe en direction axiale, poussée par un ressort que le mouvement axial des jambes d'appui (8) par rapport au corps (1) déplace en direction axiale contre la force du ressort (22), et que l'extrémité libre de la pointe (20) est en interaction avec le levier (18).

**Fig.1**

**Fig. 2**

**Fig. 3**

**Fig. 4**

**Fig. 5**